# DEMANDE DE BREVET EUROPEEN

(11) **EP 2 388 829 A1**
(43) Date de publication de la demande: **23.11.2011**
(21) Numéro de dépôt: 11354016.5
(22) Date de dépôt: 18.04.2011
(51) Int. Cl.: H01L 31/045, H01L 31/042, F24J 2/52

(54) **Module de structure porteuse pour panneaux photovoltaïques, structure porteuse comportant de tels modules et procédé de montage d'une telle structure**

(30) Priorité: 30.04.2010 FR 1001841
(71) Demandeur: Schneider Electric Industries SAS, 92500 Rueil-Malmaison (FR)
(72) Inventeur: Jacquot, Claude, 38050 Grenoble Cedex 09 (FR)
(74) Mandataire: Picard, Laurent

(57) **Abrégé**

Module de structure (10) porteuse pour panneaux photovoltaïques comportant un ensemble de traverses métalliques (2) disposées de manière à former un treillis (1) formant un plan XY de pose des panneaux, au moins deux pieds (3). Chaque pied comporte au moins une première extrémité (3A) fixée au treillis (1) et au moins une seconde extrémité (3B) destinée à être fixée directement ou indirectement au sol. Ladite au moins une première extrémité (3A) de chaque pied (3) est fixée au treillis (1) par une première articulation autorisant une rotation du pied (3) autour d'un premier axe de rotation, des premiers moyens de blocage autorisant le blocage du pied (3) déplié dans une position de travail, le positionnement relatif desdites au moins deux secondes extrémités vis-à-vis du sol formant un premier axe fictif de rotation (H1) dudit treillis vis-à-vis du sol.

## Description

### DOMAINE TECHNIQUE DE L'INVENTION

L'invention est relative à un module de structure porteuse pour panneaux photovoltaïques comportant un ensemble de traverses métalliques disposées de manière à former un treillis formant un plan XY de pose des panneaux et comportant au moins deux pieds, chaque pied comportant au moins une première extrémité fixée au treillis et au moins une seconde extrémité destinée à être fixée directement ou indirectement au sol. L'invention est aussi relative à une structure porteuse comprenant au moins deux modules de structure porteuse selon l'invention.

En outre l'invention est relative à un procédé de montagne d'une structure porteuse selon l'invention.

### ETAT DE LA TECHNIQUE ANTERIEURE

L'utilisation de structure porteuse destinée au support et au maintien d'un grand nombre de panneaux photovoltaïques est particulièrement utilisée dans des exploitations électriques appelées couramment des fermes photovoltaïques.

Les structures porteuses comportent traditionnellement des poteaux plantés dans le sol. Sur ces poteaux sont positionnées des premières traverses métalliques destinées à réaliser une première trame de la structure porteuse. Ces premières traverses métalliques relient de préférence les poteaux entre eux. En outre, des secondes traverses métalliques sont positionnées de façon perpendiculaire aux premières traverses afin de réaliser une seconde trame de la structure porteuse. Les poteaux sont généralement répartis sur deux rangés disposée de manière parallèle. Afin d'orienter les structures porteuses de manière adéquate en fonction du rayonnement du soleil, la hauteur des poteaux de la première rangée est différente de la hauteur des poteaux de la seconde rangée.

Le montage des structures porteuses se fait généralement sur site. Autrement dit à partir d'un lot de premières traverses, de poteaux, des secondes traverses ; le monteur réalise la structure à partir de l'ensemble des pièces détachées présentes sur le site.

Ce montage sur site présente quelques inconvénients. En effet, le monteur est soumis aux aléas climatiques. En outre, le montage des différentes pièces de la structure est soumis à des règles précises de montage qui ne sont pas toujours faciles à respecter lorsque tout est réalisé à la volée.

### EXPOSE DE L'INVENTION

L'invention vise donc à remédier aux inconvénients de l'état de la technique, de manière à proposer un module de structure porteuse destinée au support et au maintien d'un grand nombre de panneaux photovoltaïques.

Chaque pied du module de structure porteuse pour panneaux photovoltaïques selon l'invention comporte au moins une première extrémité fixée au treillis par une première articulation autorisant une rotation du pied autour d'un premier axe de rotation, des premiers moyens de blocage autorisant le blocage du pied déplié dans une position de travail, le positionnement relatif desdites au moins deux secondes extrémités vis-à-vis du sol formant un premier axe fictif de rotation dudit treillis vis-à-vis du sol.

De préférence, les premiers moyens de blocage bloquent la première articulation des pieds dans une position de travail.

Selon un mode développement de l'invention, chaque pied comporte une structure en forme de V, chaque première extrémité des branches du V étant respectivement reliée au treillis par une première articulation, le positionnement des premières articulations définissant un second axe fictif de rotation du pied par rapport au treillis entre la position de travail dépliée et une position de repos pliée.

De préférence, le second axe fictif de rotation étant sensiblement aligné avec un axe longitudinal du plan du treillis, les seconds axes fictifs de rotation des deux pieds étant parallèles.

Selon un mode particulier de réalisation, les deux pieds sont de longueur différente.

De préférence, le module selon l'invention comporte des seconds moyens de bloquage destinés à bloquer une articulation positionnée sur les secondes extrémités des pieds afin de limiter la rotation du treillis autour du premier axe fictif de rotation.

La structure porteuse selon l'invention comporte des moyens de fixation et d'alignement des deux de treillis des deux modules de structure porteuse de manière à disposer les deux plans XY de pose des panneaux dans un même plan.

Le procédé de montagne d'une structure porteuse selon l'invention consiste à :
- faire pivoter les pieds autour du second axe fictif de rotation pour les positionner dans la position de travail dépliée ;
- bloquer les premiers moyens de blocage de manière à bloquer l'articulation positionnée entre chaque première extrémité des pieds et le treillis ;
- fixer les secondes extrémités des pieds sur un support au sol ;
- faire pivoter les treillis autour du premier axe fictif de rotation ;
- aligner les plans des deux treillis
- placer les moyens de fixation et d'alignement pour solidariser les deux treillis.

Avantageusement, le procédé de montage consiste à bloquer les seconds moyens de blocage.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue en perspective d'un module de structure porteuse pour panneaux photovoltaïques selon un mode de réalisation de l'invention ;
- la figure 2 représente une vue de coté d'un module de structure porteuse pour panneaux photovoltaïques selon la figure 1 ;
- la figure 3 représente une vue schématique en cours de montage de modules de structure porteuse pour panneaux photovoltaïques selon la figure 1 ;
- la figure 4 représente une vue schématique d'une structure porteuse comportant deux modules de structure porteuse selon la figure 1.

### DESCRIPTION DETAILLEE D'UN MODE DE REALISATION

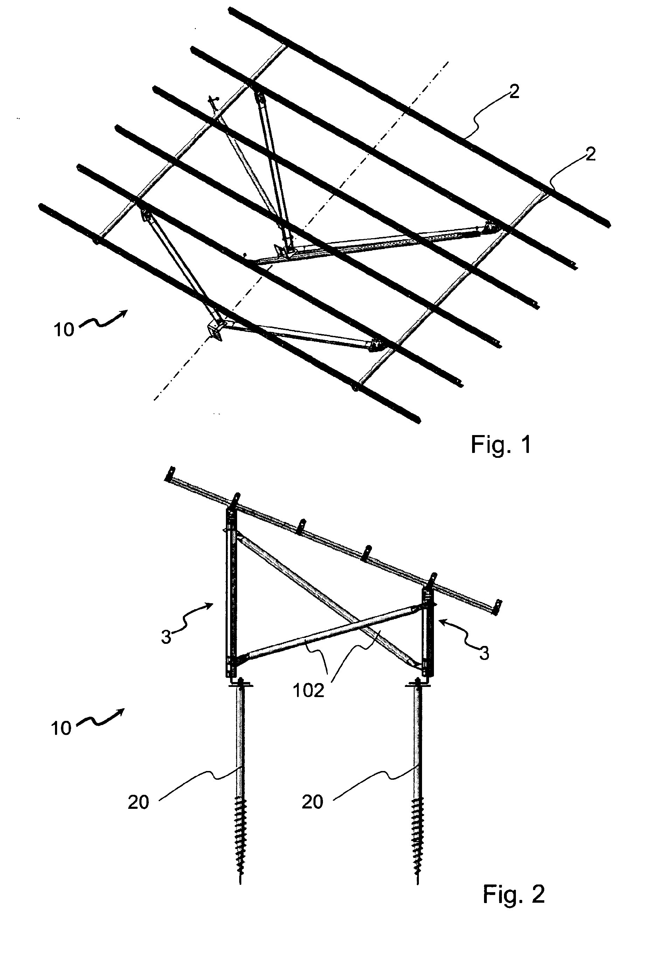

Selon un mode de réalisation tel représenté sur les figures 1 à 3, le module de structure 10 porteuse pour panneaux photovoltaïques comporte un ensemble de traverses métalliques 2 disposées de manière à former un treillis 1 formant un plan XY de pose des panneaux. Le plan de pose des panneaux solaires s'étend de préférence selon un axe longitudinal Y.

A titre d'exemple de réalisation, le treillis 1 est de forme rectangulaire. Comme représenté sur la figure 2, le treillis comporte des premières traverses agencées de manière parallèle à l'axe longitudinal Y et au moins deux secondes traverses positionnées de préférence de manière perpendiculaire aux premières traverses. Les panneaux photovoltaïques sont destinés à être fixés sur les premières traverses. A titre d'exemple de réalisation, deux premières traverses placées l'une à coté de l'autre sont utiles au positionnement des panneaux solaires.

D'autres agencements des premières et secondes traverses pourraient être envisagés pour le positionnement des panneaux solaires. Par exemple, une seule première traverse pourrait être utilisée pour la fixation des panneaux solaires.

A titre d'exemple de réalisation, le treillis 1 peut être réalisé en métal et/ou en matériaux composites.

Le treillis 1 comporte au moins deux pieds 3 destinés respectivement la fixation du treillis par rapport au sol. Chaque pied comportant au moins une première extrémité 4A fixée au treillis 1 et au moins une seconde extrémité 4B destinée à être fixée directement ou indirectement au sol. Généralement, la seconde extrémité 4B est fixée sur un pied ou un socle placé dans le sol.

A titre d'exemple de réalisation tel que représenté sur les figure, les secondes extrémités 4B sont destinées à être fixées sur un pied 20 dont un partie est enterrée. Le partie enterrée comporte de préférence une zone filetée afin que pied 20 puisse être monté et démonté facilement.

Selon un mode préférentiel de réalisation, ladite au moins une première extrémité 4A de chaque pied 3 est fixée au treillis 1 par une première articulation autorisant une rotation du pied 3 autour d'un axe de rotation. Le pied 3 peut tourner autour dudit axe de rotation et se déplacer entre deux positions extrêmes : une première position dite de transport et une seconde position dite de travail. Dans la position de transport, le pied 3 est alors sensiblement positionné contre le treillis 1 dans un plan parallèle à celui du plan de pose XY. Dans la position de travail, le pied 3 est alors sensiblement positionné de manière perpendiculaire au plan de pose XY du treillis 1.

Le treillis 1 selon un mode de développement comporte des premiers moyens de blocage autorisant le blocage en rotation du pied 3 déplié dans la position de travail. Les premiers moyens de blocage bloquent la première articulation des pieds 3 dans une position de travail. A titre d'exemple de réalisation, les premiers moyens de blocage comportent un système boulon-écrou pour solidariser le pied 3 au treillis. Il est aussi possible d'utiliser un système de goupille.

Selon un mode préférentiel de réalisation, ladite au moins une seconde extrémité 4B de chaque pied 3 est fixée au sol par une seconde articulation autorisant une rotation du pied 3 autour d'un second axe de rotation. Le pied 3 peut tourner autour dudit second axe de rotation. Le positionnement relatif desdites au moins deux secondes extrémités 4B vis-à-vis du sol formant un axe second fictif H2 de rotation dudit treillis vis-à-vis du sol.

Selon un mode de développement de l'invention, l'axe second fictif H2 de rotation du treillis 1 vis-à-vis du sol est sensiblement positionné au milieu du treillis selon l'axe longitudinal Y. Lorsque le treillis est positionné sur le sol via les secondes extrémités 4B des pieds 3, ledit treillis se trouve dans une position dite de basculement où une première extrémité des premières traverses métalliques du module structure 10 porteuse est posée sur le sol alors qu'une seconde extrémité des premières traverses métalliques est en l'air. Le positionnement équilibré dudit axe vis-à-vis du plan de pose XY du treillis 3 autorise un basculement avec un minimum d'effort du treillis autour dudit axe, basculement d'une première position de basculement vers une seconde position de basculement et inversement.

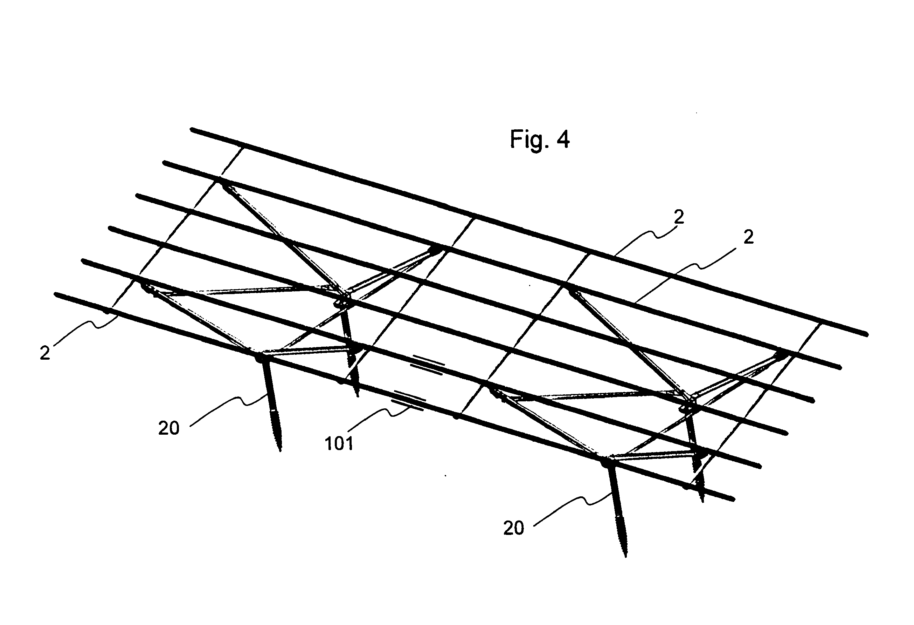

Selon un mode de développement de l'invention telle que représenté sur la figure 4, chaque pied 3 du module de structure 10 porteuse comporte une forme de V. La forme de V du pied 3 comporte deux branches 3A, 3B reliées entre elle pour former la seconde extrémité 4B dudit pied.

En outre, les deux branches 3A, 3B comportent des premières extrémités 3A reliées respectivement au treillis 1 par une première articulation. Le positionnement des deux premières articulations définissant un premier axe fictif H1 de rotation du pied 3 en forme de V par rapport au treillis entre la position de travail dépliée et une position de repos pliée. Ledit premier axe fictif H1 de rotation est sensiblement aligné avec un axe longitudinal Y du treillis, les premiers axes fictifs H1 de rotation des deux pieds 3 étant parallèles.

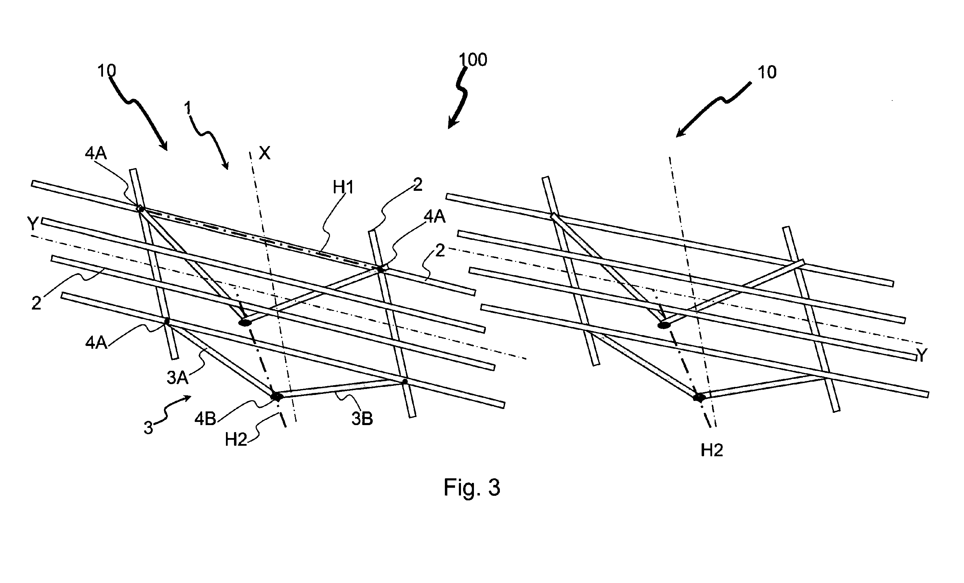

Selon un mode de développement de l'invention tel que représenté sur la figure 3, les deux pieds 3 sont de longueur différente. Le positionnement du module de structure 10 porteuse autorise un positionnement du plan de pose XY des treillis 1 de manière non parallèle à une surface du sol. Cette orientation du treillis par rapport au sol permet notamment de garantir une incidence correcte par rapport aux rayons du soleil.

Selon une variante de réalisation de l'invention telle que représenté sur les figures 3 et 4, le module de structure 10 porteuse comporte au moins une jambe de force 102. Ladite jambe de force comporte une première extrémité fixée sur un premier pied 3 et une seconde extrémité fixée sur un second pied 3.

Selon un mode de développement de l'invention, le module de structure 10 comporte des seconds moyens de blocage destinés à bloquer une articulation positionnée sur les secondes extrémités 3B des pieds 3 afin de limiter la rotation du treillis 1 autour du second axe fictif H2 de rotation. A titre d'exemple de réalisation, les seconds moyens de blocage comportent un système boulon-écrou pour solidariser le pied 3 sur le sol. Il est aussi possible d'utiliser un système de goupille.

L'invention est aussi relative à une structure porteuse 100. Ladite structure porteuse comprend au moins deux modules de structure porteuse 10 selon les modes de réalisation de l'invention. Ladite structure porteuse 100 comporte des moyens de fixation et d'alignement 101 des deux de treillis dans un même plan. A titre d'exemple de réalisation, les moyens de fixation et d'alignement 101 se positionnent aux extrémités des premières traverses métalliques d'un premier module 10 et aux extrémités des premières traverses métalliques d'un second module 10. Comme représenté sur la figure 4, lesdits moyens de fixation et d'alignement 101 permettent un alignement desdites premières traverses métalliques de deux modules de structure porteuse 10.

L'invention est aussi relative à un procédé de montagne d'une structure porteuse 100 comportant au moins deux modules de structure 10 porteuse pour panneaux photovoltaïques selon les modes de réalisation de l'invention.

Le procédé selon l'invention consiste à déplier les pieds 3 pour les placer d'une position pliée dans une position dépliée. Le procédé consiste ensuite à bloquer les pieds avec les premiers moyens de blocage autorisant le blocage en rotation du pied 3 déplié dans la position de travail. Les modules de structure 10 porteuse sont alors respectivement dans une position dite basculée. Trois configurations sont alors envisageables :
- Dans une première configuration, toutes les extrémités des premières traverses métalliques destinées à être assemblées par les moyens de fixation et d'alignement 101 sont posées sur le sol.
- Dans une seconde configuration, toutes les extrémités des premières traverses métalliques destinées à être assemblées par les moyens de fixation et d'alignement 101 sont en l'air.
- Dans une troisième configuration, les extrémités des premières traverses métalliques d'un premier module de structure 10 porteuse sont posés au sol et les extrémités des premières traverses métalliques d'un second modules de structure 10 porteuse sont posés en l'air.

La seconde étape consiste à faire pivoter les pieds autour du second axe fictif H2 de rotation pour les positionner dans une position de travail dépliée. La position de travail dépliée se caractérise par le fait que les plans de pose XY des deux modules sont alignés. Plus précisément, comme représenté sur la figure 4, chaque première traverse d'un treillis est alignée avec une première traverse d'un second treillis.

Selon une variante du procédé, préalablement à la seconde étape, le procédé selon l'invention consiste à fixer les secondes extrémités 3B des pieds 3 de deux modules de structure 10 porteuse sur le sol.

Une troisième étape consiste à placer les moyens de fixation et d'alignement 1001 pour solidariser les deux treillis 1.

Une quatrième étape consiste à bloquer au moyen des seconds moyens de blocage les secondes extrémités 3B des pieds 3 et le support au sol afin de limiter tout pivotement des treillis 1 autour du second axe fictif H2 de rotation ;

## Revendications

1. Module de structure (10) porteuse pour panneaux photovoltaïques comportant :
- un ensemble de traverses métalliques (2) disposées de manière à former un treillis (1) formant un plan XY de pose des panneaux,
- au moins deux pieds (3), chaque pied comportant au moins une première extrémité (3A) fixée au treillis (1) et au moins une seconde extrémité (3B) destinée à être fixée directement ou indirectement au sol ;
module **caractérisé en ce que** ladite au moins une première extrémité (3A) de chaque pied (3) est fixée au treillis (1) par une première articulation autorisant une rotation du pied (3) autour d'un premier axe de rotation, des premiers moyens de blocage autorisant le blocage du pied (3) déplié dans une position de travail, le positionnement relatif desdites au moins deux secondes extrémités vis-à-vis du sol formant un premier axe fictif de rotation (H1) dudit treillis vis-à-vis du sol.

2. Module selon la revendication 1, **caractérisé en ce que** les premiers moyens de blocage bloquent la première articulation des pieds dans une position de travail.

3. Module selon la revendication 1 ou 2, **caractérisé en ce que** chaque pied (3) comporte une structure en forme de V, chaque première extrémité des branches du V étant respectivement reliée au treillis (1) par une première articulation, le positionnement des premières articulations définissant un second axe fictif (H2) de rotation du pied par rapport au treillis (3) entre la position de travail dépliée et une position de repos pliée.

4. Module selon la revendication 3, **caractérisé en ce que** le second axe fictif de rotation (H2) étant sensiblement aligné avec un axe longitudinal du plan du treillis, les seconds axes fictifs de rotation des deux pieds étant parallèles.

5. Module selon l'une quelconque des revendications précédentes, **caractérisé en ce que** les deux pieds (3) sont de longueur différente.

6. Module selon l'une quelconque des revendications précédentes, **caractérisé en ce qu'**il comporte des seconds moyens de bloquage destinés à bloquer une articulation positionnée sur les secondes extrémités (3B) des pieds (3) afin de limiter la rotation du treillis autour du premier axe fictif (H1) de rotation.

7. Structure porteuse comportant au moins deux modules de structure porteuse selon les revendications précédentes, **caractérisé en ce que** la structure comporte des moyens de fixation et d'alignement (101) des deux de treillis (1) des deux modules de structure porteuse de manière à disposer les deux plans XY de pose des panneaux dans un même plan.

8. Procédé de montagne d'une structure porteuse selon la revendication 7, **caractérisé en ce qu'**il consiste à :
- faire pivoter les pieds autour du second axe fictif (H2) de rotation pour les positionner dans la position de travail dépliée ;
- bloquer les premiers moyens de blocage de manière à bloquer l'articulation positionnée entre chaque première extrémité des pieds et le treillis ;
- fixer les secondes extrémités des pieds sur un support au sol ;
- faire pivoter les treillis autour du premier axe fictif (H1) de rotation ;
- aligner les plans des deux treillis
- placer les moyens de fixation et d'alignement pour solidariser les deux treillis.

9. Procédé de montage selon la revendication 8, **caractérisé en ce qu'**il consiste à bloquer les seconds moyens de blocage.
